# DEMANDE DE BREVET EUROPEEN

(11) **EP 1 374 700 A1**
(43) Date de publication de la demande: **02.01.2004**
(21) Numéro de dépôt: 03291562.1
(22) Date de dépôt: 25.06.2003
(51) Int. Cl.: A23L 1/16

(54) **Pates alimentaires tubulaires et de texture ferme en bouche.**

(30) Priorité: 25.06.2002 FR 0207838
(71) Demandeur: Pastacorp, 13100 Aix en Provence (FR)
(72) Inventeur: Minier Chantal, 13400 Auabagne (FR); Combe, Daniel, 13009 Marseile (FR)
(74) Mandataire: Quantin, Bruno Marie Henri

(57) **Abrégé**

Une pâte alimentaire crue, tubulaire, oblongue et de section transversale au moins égale à 12 mm² et, de préférence, au moins égale à 15 mm², est caractérisée en ce que
- il est issu des faces intérieures des parois (2-5) qui la délimitent des parties pleines (6, 7) qui occupent au moins le tiers du volume intérieur délimité par ces parois (2-5),
- chacune des parties pleines (6, 7) a une épaisseur inférieure à 1.5 mm.

Il peut s'agir de pâtes sèches ou fraîches, ayant avantageusement, au moins après cuisson, l'apparence de frites.

## Description

La présente invention se rapporte aux pâtes alimentaires et, plus particulièrement, aux pâtes alimentaires tubulaires et oblongues. Par oblongues on entend que la dimension longitudinale de la pâte est au moins aussi grande que 6 à 8 fois, et notamment 12 fois, la plus grande dimension de la section transversale. Par tubulaire on entend des pâtes à section circulaire, mais surtout des pâtes à section rectangulaire et notamment carrée, de grande section transversale, notamment au moins égale à 12 mm².

On connaît déjà des pâtes alimentaires tubulaires de grande section transversale. Mais ces pâtes creuses n'ont pas en bouche des caractéristiques de texture analogues à celles que donnerait un produit plein. Par ailleurs, les enfants ont souvent un goût quasi-exclusif pour les frites, de sorte qu'il est souvent difficile de varier leur alimentation avec succès.

L'invention remédie à ces inconvénients par une pâte alimentaire tubulaire, oblongue, de grande section transversale, dont la texture en bouche est analogue à celles d'un produit plein, tout en offrant, notamment pour les enfants (mais aussi pour les adultes), des attraits similaires à ceux des frites.

L'invention a pour objet une pâte alimentaire crue, ayant une teneur en eau inférieure ou égale à 12,5 %, tubulaire, oblongue, de section transversale au moins égale à 12 mm² et, de préférence, à 15 mm², caractérisée en ce qu'il est issu des faces intérieures des parois qui la délimitent des parties pleines qui délimitent des cavités et qui occupent au moins le tiers du volume intérieur délimité par les parois, chacune des parties pleines ayant une épaisseur inférieure à 1,5 mm.

Grâce au fait que les épaisseurs des parties pleines sont inférieures à 1,5 mm et de préférence inférieures ou égales à 1 mm, on peut sécher la pâte alimentaire crue, destinée à donner la pâte alimentaire sèche ayant une teneur en eau inférieure ou égale à 12,5 %, sans difficulté dans des conditions industrielles, ce qui permet donc de préparer une pâte de ce genre et on peut la faire cuire ensuite en temps raisonnable, mais, grâce à la présence des parties pleines qui occupent au moins le tiers du volume intérieur délimité par les parois de délimitation, lorsque l'on fait cuire ces pâtes alimentaires, ces parties gonflent et occupent au moins environ les deux tiers du volume intérieur délimité par les parois de sorte que le consommateur a la sensation en bouche, lorsqu'il consomme ces pâtes cuites, de consommer des pâtes pleines.

L'invention vise également une pâte alimentaire crue, fraîche, c'est-à-dire dont la teneur en poids en eau dépasse 12,5 %, qui est tubulaire, oblongue et dont il est issu des faces intérieures des parois qui la délimitent des parties pleines qui occupent au moins le tiers du volume intérieur délimité par les faces intérieures des parois, alors que chacune des parties pleines a une épaisseur inférieure à 1,5 mm. Dans le cas de pâtes fraîches, la difficulté du séchage ne se pose plus, mais on obtient toujours pour un temps de cuisson raisonnable, les mêmes qualités gustatives que pour les pâtes sèches définies précédemment.

On peut noter que des pâtes alimentaires creuses comportant des parties pleines étaient par exemple connues des documents JP-61 239850 (MAMAA MAKARONI KK) ou US-5 935 628, mais que la pâte alimentaire de l'invention s'en distingue notamment par le fait qu'elle est oblongue (une pâte cubique ou presque cubique, avec un rapport entre longueur et largeur au plus égal à 2, telle que celle du document japonais ne peut être assimilée à une pâte oblongue et a des propriétés nécessairement différentes) et que les parties pleines occupent au moins le tiers du volume défini par les parois (ce qui est sans commune mesure avec ce que propose le document américain).

Suivant un mode de réalisation particulièrement préféré, les faces extérieures des parois de délimitation de la pâte alimentaire définissent un parallélépipède. On obtient ainsi une pâte qui, après cuisson, a quasiment l'aspect d'une frite et qui, en raison de sa texture ferme, peut être mangée avec les doigts comme une frite.

Pour empêcher que la pâte alimentaire, tant crue que cuite, et notamment la frite, ne se courbe, il est bon que les parties pleines aient une épaisseur au moins égale à 0,5 mm.

L'invention vise enfin une pâte alimentaire cuite, tubulaire, oblongue de section transversale au moins égale à 12 mm² et, de préférence, au moins égale à 15 mm², caractérisée par une fermeté telle que définie au viscoélastographe Chopin supérieure à 35. De préférence, la pâte alimentaire cuite suivant l'invention a une recouvrance élastique telle que déterminée au viscoélastographe Chopin supérieure à 0,150.

Selon d'autres caractéristiques préférées de l'invention, éventuellement combinées:
- les faces des parois de délimitation définissent un parallélépipède et cette pâte a la forme d'une frite, de préférence de section carrée (ou sinon de section rectangle), par exemple de l'ordre de 5 mm x 5 mm à 10 mm x 10 mm, ce qui correspond à un format de frite ; la longueur de cette pâte vaut par exemple entre environ 4 cm et environ 6 cm, ce qui est aussi une longueur courante pour des frites ; la longueur de cette pâte vaut de l'ordre de 6 fois à 12 fois (voire plus) sa plus grande largeur, ce qui correspond aussi à un rapport courant dans le domaine des frites ; il s'agit par exemple de petites pâtes dont le côté vaut de l'ordre de 5 mm sur une longueur de l'ordre de 4 cm, ou de plus grandes pâtes dont le côté vaut de l'ordre de 6 à 8 mm sur une longueur de l'ordre de 5 à 6 cm, ce qui correspond à un rapport longueur/largeur de l'ordre de 8.
- les parties pleines occupent au plus les deux tiers du volume intérieur délimité par les parois, de préférence entre 40% et 60% de ce volume, ce qui contribue à obtenir de manière reproductible un remplissage complet ou en tout cas suffisant pour obtenir une texture ferme approchant celle d'un produit plein, dans toute sa section ; un taux de 55 % est apparu tout à fait satisfaisant,
- les parties pleines se croisent en délimitant des cavités, de préférence identiques et symétriques par rapport à l'axe central de la pâte, ce qui contribue à approcher une texture constante dans toute la section de la pâte ; ces parties pleines sont de préférence au nombre de deux et délimitent quatre cavités (même si un plus grand nombre de parties pleines et de cavités est possible) ; ces cavités sont de préférence carrées mais peuvent aussi être circulaires,
- dans le cas où les parties pleines délimitent des cavités, la largeur de chaque cavité (par exemple le côté dans le cas d'une forme carrée ou le diamètre dans le cas d'une forme circulaire) est sensiblement égale à l'épaisseur de chaque partie pleine, laquelle est avantageusement sensiblement égale à l'épaisseur de chaque paroi ; indépendamment de la taille des cavités, les épaisseurs des parois et des parties pleines sont avantageusement égales,
- chaque partie pleine a une épaisseur au moins égale à 0.5 mm et de préférence égale ou inférieure à 1 mm ; elle est de préférence comprise entre 0.9 mm et 1 mm, par exemple sensiblement égale à 1 mm
- les parties pleines ont une épaisseur sensiblement égale à celles des parois, par exemple égales à de l'ordre de 1 mm.

Le produit peut être lisse ou comporter des rayures externes.

La longueur du produit peut être variable selon la forme souhaitée (30 à 60 mm, de préférence 40 à 60 mm).

Le produit peut être coupé droit ou en biseau.

Des objets, caractéristiques et avantages de l'invention ressortent de la description qui suit, donnée à titre d'exemple illustratif non limitatif, en regard des dessins annexés sur lesquels :
- la figure 1 est une vue en section d'un premier exemple de réalisation d'une pâte selon l'invention,
- la figure 2 est une vue en section d'un second exemple de réalisation,
- la figure 3 est une vue en section d'un troisième exemple de réalisation,
- la figure 4 est une vue en section d'un quatrième exemple de réalisation, et
- la figure 5 est une vue en section d'un cinquième exemple de réalisation.

Les exemples de réalisation qui sont représentés sont en forme de frite.

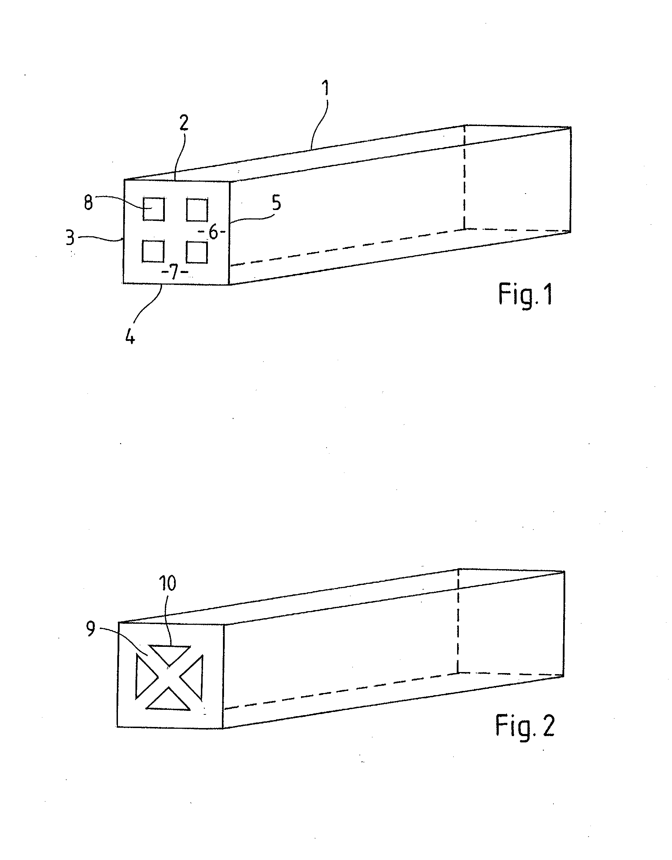

La pâte alimentaire crue profilée (avec ici, par exemple, une longueur de 4 cm) représentée à la figure 1 a quatre faces ou parois délimitées par des génératrices 1, à l'avant par une section transversale carrée ayant les côtés 2, 3, 4 et 5 et à l'arrière par une section transversale identique à celle de l'avant. Les faces correspondant à ces côtés sont les faces de la pâte tubulaire parallélépipédique. Il est issu du milieu des côtés 3 et 5 une partie pleine 6 qui s'entrecroise avec une partie 7 pleine issue des milieux des côtés 2 et 4 pour former un croisillon en délimitant quatre cavités 8 tubulaires carrées. Les parties 6 et 7 pleines occupent 40 à 60 % du volume intérieur délimité par les faces du parallélépipède. La pâte est obtenue à base de semoule de blé dur.

Les parties pleines ont ici une épaisseur sensiblement égale à celle des parois 2 à 4, par exemple 1 mm, et de manière préférée, les quatre cavités 8 ont un côté sensiblement égal à cette épaisseur, soit de l'ordre de 1 mm, de sorte que la section globale est sensiblement égale à de l'ordre de 5 mm x 5 mm (à environ 0.5 mm près), ce qui donne, pour une longueur de l'ordre de 4 cm, un rapport de l'ordre de 8 entre la longueur et les dimensions transversales. Les parties pleines représentent ainsi de l'ordre de 55 % du volume délimité par les parois.

En variante, la pâte est plus grande, avec une plus grande section et une plus grande longueur, par exemple de l'ordre de 6-8 mm x 6-8 mm sur de l'ordre de 5-6 cm, par exemple environ 7 mm x 7 mm sur 5.5 cm, c'est à dire de l'ordre de 40% de plus que dans le premier exemple précité. Les dimensions des parties pleines et des cavités peuvent être augmentées en conséquence, dans le même rapport ; elles peuvent aussi être choisies chacune inférieure à l'épaisseur des parois.

A la figure 2, les parties 6 et 7 pleines sont remplacées par des parties 9 et 10 qui sont disposées en diagonale et les cavités sont triangulaires. L'épaisseur de ces parties pleines est ici plus faible que celle des parois, mais le taux d'occupation du volume intérieur par ces parties pleines est sensiblement égal à celui de le figure 1.

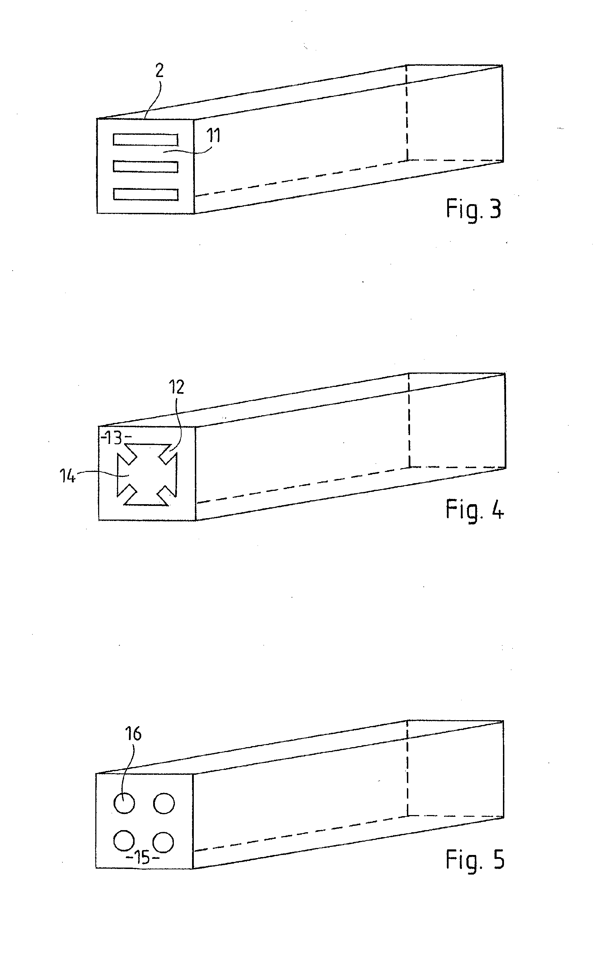

A la figure 3, ces parties pleines sont remplacées par deux parties 11 pleines qui partent des côtés 3 et 5 parallèlement au côté 2 (d'où quatre parties horizontales, en comptant les parois supérieure et inférieure), en laissant subsister trois fentes d'épaisseur sensiblement égale à celle des parties pleines (d'où un taux d'occupation de l'ordre de 40%).

A la figure 4, les parties 12 pleines sont en forme de demi-diagonales 12 et de parties 13 parallèles aux côtés 1 à 4 en laissant une cavité 14 centrale ayant la forme représentée à la figure (le taux d'occupation est ici de l'ordre du tiers).

A la figure 5, les parties 15 pleines délimitent quatre cavités 16 tubulaires de section circulaire, dont le rayon est ici sensiblement égal à l'épaisseur des parties pleines et de à celle des parois ; le taux d'occupation est donc, dans cet exemple, de l'ordre du tiers.

Ce qui précède vaut pour des pâtes sèches ainsi que pour des pâtes fraîches (avec une teneur en eau qui est, selon le cas, inférieure ou égale, ou supérieure, à 12.5 %).

### Caractéristiques organoleptiques du produit de la figure 1

Le produit (par exemple celui de la figure 1) se cuit dans l'eau bouillante, comme les pâtes alimentaires traditionnelles. A la cuisson, le produit gonfle. Les parties pleines intérieures ont tendance à boucher les cavités intérieures du produit pour lui conférer des caractéristiques de texture particulière, tout à fait attrayantes, différentes de celles des pâtes alimentaires classiques, notamment des pâtes tubulaires classiques.

Les résultats des analyses au viscoélastographe montrent une nette différence entre une pâte tubulaire sans les parties pleines intérieures et le produit suivant l'invention.

Après cuisson, un produit identique sans partie pleine intérieure manque nettement de rigidité. Il s'affaisse et perd sa forme parallélépipédique. Au contraire, le produit suivant l'invention reste rigide, conserve bien sa forme et procure en bouche une impression de fermeté et d'élasticité (en particulier, sa forme parallélépipédique est conservée sans gonflement en sa partie centrale, conservant ainsi la forme de frite). Cette sensation en bouche est confirmée par les analyses effectuées au viscoélastographe (voir protocole ci-dessous) qui montre une nette différence entre les deux produits :

| Echantillon | Temps de cuisson (min) | Fermeté | Recouvrance relative |
|---|---|---|---|
| Produit comparatif | 9 | 27,8 | 0,111 |
| Produit suivant l'invention | 9 | 44,7 | 0,292 |

### Protocole du viscoélastographe Chopin

Le viscoélastographe Chopin permet d'évaluer les caractéristiques viscoélastographes d'une pâte alimentaire cuite en appréciant sa déformation (mesure d'épaisseur) sous l'application d'une force constante.

On applique à la pâte cuite une force de 500g pendant 40 secondes, puis relâchement de la force pendant 20 secondes.

Pour la mesure au viscoélastographe, 50g de pâtes sont cuits dans 2 litres d'eau bouillante salée à 10g. A la fin de la cuisson, les pâtes sont égouttées pendant une minute à l'aide d'une passoire. Un échantillon de 7 brins est prélevé puis mis à refroidir pendant 10 min dans une boîte de Pétri de 60 mm placée sur une plaque éponge humide et recouverte par une boîte de Petri de 80 mm de façon que cette dernière crée un joint étanche avec l'eau qui imbibe la plaque éponge.

Au bout des 10 minutes de refroidissement, les brins de pâtes sont coupés à 4 cm puis placés sur le viscoélastographe.

On note l'épaisseur E du brin avant l'application de la force, puis e1 l'épaisseur après 40 secondes d'écrasement. On relâche la contrainte pendant 20 secondes et on mesure à nouveau l'épaisseur e2.

A partir de ces 3 mesures, on calcule la fermeté F = 100x(e1/E) et la recouvrance relative Rr = (e2-e1)(E-e1).

Cinq mesures sont effectuées sur la même cuisson pour calculer la moyenne sur les cinq résultats obtenus.

## Revendications

1. Pâte alimentaire crue, tubulaire, oblongue et de section transversale au moins égale à 12 mm² et, de préférence, au moins égale à 15 mm², **caractérisée en ce que**
- il est issu des faces intérieures des parois (2-5) qui la délimitent des parties pleines (6, 7) qui occupent au moins le tiers du volume intérieur délimité par ces parois (2-5),
- chacune des parties pleines (6, 7) a une épaisseur inférieure à 1.5 mm.

2. Pâte alimentaire selon la revendication 1, ayant en poids une teneur en eau inférieure ou égale à 12.5 %.

3. Pâte alimentaire selon la revendication 1, ayant en poids une teneur en eau supérieure à 12.5 %.

4. Pâte selon l'une quelconque des revendications 1 à 3, **caractérisée en ce que** les faces des parois de délimitation définissent un parallélépipède et cette pâte a la forme d'une frite.

5. Pâte selon l'une quelconque des revendications 1 à 4, **caractérisée en ce que** sa section transversale est carrée.

6. Pâte selon la revendication 5, **caractérisée en ce que** la section transversale carrée est de l'ordre de 5 mm x 5 mm à 10 mm x 10 mm.

7. Pâte selon l'une quelconque des revendications 1 à 6, **caractérisée en ce que** sa longueur est comprise entre environ 4 cm et environ 6 cm.

8. Pâte selon la revendication 6 ou la revendication 7, **caractérisée en ce qu'**elle a environ 5 mm de côté sur une longueur de l'ordre de 4 cm.

9. Pâte selon la revendication 6 ou la revendication 7, **caractérisée en ce qu'**elle a environ 6-8 mm de côté sur une longueur de l'ordre de 5-6 cm.

10. Pâte selon l'une quelconque des revendications 1 à 9, **caractérisée en ce que** sa longueur vaut entre 6 et 12 fois sa plus grande largeur.

11. Pâte selon la revendication selon la revendication 10, **caractérisée en ce que** sa longueur vaut environ 8 fois sa plus grande largeur.

12. Pâte alimentaire selon l'une quelconque des revendications 1 à 11, **caractérisée en ce que** les parties pleines occupent au moins 40 % et au plus 60% du volume intérieur délimité par ces parois.

13. Pâte alimentaire selon la revendications 12, **caractérisée en ce que** les parties pleines occupent de l'ordre de 55 % du volume intérieur délimité par ces parois.

14. Pâte alimentaire selon l'une quelconque des revendications 1 à 13, **caractérisé en ce que** les parties pleines se croisent en délimitant des cavités.

15. Pâte alimentaire selon la revendication 14, **caractérisée en ce que** les parties pleines sont au nombre de deux et se croisent en délimitant quatre cavités.

16. Pâte alimentaire selon la revendication 14 ou la revendication 15, **caractérisée en ce que** ces cavités sont identiques et carrées, symétriques par rapport à l'axe central de cette pâte.

17. Pâte alimentaire selon la revendication 14 ou la revendication 15, **caractérisée en ce que** les cavités sont identiques et circulaires, symétriques par rapport à l'axe central de cette pâte.

18. Pâte selon l'une quelconque des revendications 14 à 17, **caractérisée en ce que** la largeur de chaque cavité est sensiblement égale à l'épaisseur de chaque partie pleine (6, 7).

19. Pâte selon l'une quelconque des revendications 1 à 18, **caractérisée en ce que** la largeur de chaque partie pleine est sensiblement égale à l'épaisseur de chaque paroi.

20. Pâte selon l'une quelconque des revendications 1 à 19, **caractérisée en ce que** chacune des parties pleines a une épaisseur au moins égale à 0.5 mm.

21. Pâte selon la revendication 20, **caractérisée en ce que** cette épaisseur est au plus égale à 1 mm.

22. Pâte selon la revendication 21, **caractérisée en ce que** cette épaisseur est au moins égale à 0.9 mm.

23. Pâte selon la revendication 20, **caractérisée en ce que** chacune des parties pleines a une épaisseur sensiblement égale à 1 mm.

24. Pâte selon l'une quelconque des revendications 1 à 23, **caractérisée en ce que**, cuite, sa fermeté telle que définie au viscoélastographe Chopin est supérieure à 35.

25. Pâte selon la revendication 24, **caractérisée en ce que** sa recouvrance relative, telle que déterminée au viscoélastographe Chopin est supérieure à 0.150.
